(19) **Europäisches Patentamt**

**European Patent Office**

**Office européen des brevets**

(11) **EP 0 881 804 B1**

(12) **FASCICULE DE BREVET EUROPEEN**

(45) Date de publication et mention
de la délivrance du brevet:
**27.07.2005 Bulletin 2005/30**

(51) Int Cl.⁷: **H04L 27/00**, H04L 27/26

(21) Numéro de dépôt: **98201522.4**

(22) Date de dépôt: **11.05.1998**

(54) **Procédé de détermination d'un format d'émission de symboles dans un système de transmission et système associé**

Verfahren und System zur Bestimmung des Symbolübertragungsformats in einem Übertragungssystem

Method and system for the determination of the symbol transmission format in a transmission system

(84) Etats contractants désignés:
**DE FR GB**

(30) Priorité: **27.05.1997 FR 9706466**

(43) Date de publication de la demande:
**02.12.1998 Bulletin 1998/49**

(73) Titulaire: **Koninklijke Philips Electronics N.V.
5621 BA Eindhoven (NL)**

(72) Inventeur: **Guémas, Philippe,
Société Civile S.P.I.D.
75008 Paris (FR)**

(74) Mandataire: **Landousy, Christian
Société Civile SPID,
156, Boulevard Haussmann
75008 Paris (FR)**

(56) Documents cités:
EP-A- 0 608 024          EP-A- 0 653 858
EP-A- 0 666 661          EP-A- 0 730 357
EP-A- 0 825 742          WO-A-97/26742
DE-C- 4 405 752

**Description**

L'invention concerne un procédé applicable à un système de transmission pour déterminer un format d'émission de symboles complexes dans un signal formaté en blocs de symboles complexes, chaque bloc comportant une première occurrence d'un groupe de symboles complexes et une deuxième occurrence du même groupe de symboles complexes, les deux occurrences ayant une même durée, le procédé opérant une corrélation entre la première occurrence et la seconde occurrence pour déterminer des caractéristiques du format d'émission.

L'invention concerne également un système et un récepteur mettant en oeuvre le procédé. Le procédé est utilisé pour la réception de signaux, émis par exemple selon une répartition multiplexée de fréquences orthogonales, transmis notamment par voie hertzienne, par câble, par satellite, par exemple pour des applications en télévision numérique.

Les signaux émis selon une répartition multiplexée de fréquences orthogonales seront par la suite identifiés par l'appellation simplifiée OFDM (qui en langue anglaise signifie Orthogonal Frequency Division Multiplexing). La technique OFDM consiste à fractionner une information à transmettre en la répartissant sur un grand nombre de canaux élémentaires à bas débit. On transforme ainsi un canal à large bande fortement sélectif en un grand nombre de canaux élémentaires non sélectifs. Comme l'ensemble constitue un canal à large bande, il est peu probable que des évanouissements en cours de transmission affectent simultanément la totalité du canal. Cette technique permet également de réduire les brouillages intersymboles. A chaque canal élémentaire correspond alors une fréquence, l'ensemble des fréquences étant symétriquement réparti autour d'une fréquence porteuse centrale. Comme à la réception il est difficilement acceptable d'utiliser des filtres sélectifs, on préfère tolérer un recouvrement des spectres mais en imposant des conditions d'orthogonalité entre les fréquences pour éliminer l'interférence intersymbole aux instants d'échantillonnage.

Le signal OFDM est organisé par trames formées de blocs dont certains sont des blocs de service et d'autres des blocs de données. Pour éviter les interférences intersymboles, chaque bloc contient des informations redondantes. Un bloc quelconque est formé par toutes les fréquences OFDM que met en oeuvre le système, les fréquences étant modulées par des symboles numériques à transmettre issus d'une modulation codée, par exemple une modulation numérique MDP ou MAQ. A l'émission, ces symboles sont codés conformément à un certain format et à un certain rythme qu'il faut retrouver à la réception afin de pouvoir les décoder correctement. Donc à la réception, les signaux reçus doivent être démodulés puis décodés pour restituer les informations d'origine. L'invention se propose de retrouver les caractéristiques essentielles du format d'émission utilisé à l'émission.

On connaît le document EP 608 024 qui décrit un système de transmission numérique avec une récupération de rythme de signaux OFDM. Ce document exploite les deux occurrences d'un même groupe de symboles qui apparaissent dans un signal OFDM. Une corrélation est réalisée entre ces deux occurrences en retardant une des occurrences par un délai constant. En effet, ce document considère que ce délai est connu ce qui n'est pas le cas dans toutes les applications de cette technique. Le dispositif ainsi décrit récupère le rythme des symboles à partir d'une horloge locale, d'une division de fréquences et d'un asservissement par une boucle d'asservissement de phase. De plus, la corrélation met en oeuvre une technique soustractive qui nécessite beaucoup de mémoire de stockage. Le document WO 97/26 792 (publié le 24.07.97) décrit une synchronisation de symboles multiporteurs. EP-A-0 825 742 (publié le 25.02.98) décrit un système de transmission numérique utilisant des moyens pour retarder les blocs de symboles.

Le but de l'invention est de permettre de récupérer des symboles complexes organisés notamment en blocs OFDM en opérant en aveugle, sans connaître a priori le format d'émission.

Ce but est atteint avec un procédé de récupération de symboles complexes qui comporte les étapes suivantes:

- stockage d'une première suite de symboles complexes prise dans le signal reçu à l'aide d'une fenêtre temporelle d'acquisition laquelle présente une durée supérieure à la durée des occurrences de symboles complexes,

- corrélation de la première suite de symboles complexes avec une seconde suite de symboles complexes sélectionnée à un autre moment dans le signal reçu, à l'aide d'une fenêtre temporelle de corrélation de durée égale à celle de la fenêtre temporelle d'acquisition,

- détermination des caractéristiques du format d'émission en recherchant un maximum de corrélation entre la première suite et la seconde suite de symboles complexes en synchronisant la fenêtre d'acquisition sur le signal reçu et en positionnant temporellement les fenêtres l'une par rapport à l'autre, le maximum de corrélation apparaissant lorsque la première et la seconde suite de symboles complexes renferment respectivement lesdites première et seconde occurrences.

Plus particulièrement, le signal étant un signal à répartition multiplexée de fréquences orthogonales, dit signal OFDM, le procédé détermine un nombre de fréquences orthogonales contenues dans au moins un format d'émission du signal OFDM.

L'invention concerne également un système de transmission d'un signal à répartition multiplexée de fréquences orthogonales, dit signal OFDM, le système comprenant des moyens d'émission dudit signal formaté en blocs de symboles complexes conformément à un format d'émission, chaque bloc comportant une première occurrence d'un groupe de symboles complexes et une deuxième occurrence du même groupe de symboles complexes, les deux occurrences ayant une même durée, et des moyens de réception comportant des moyens de corrélation pour déterminer une corrélation entre la première occurrence et la seconde occurrence et déterminer des caractéristiques du format d'émission caractérisé en ce que les moyens de réception comportent:

- des moyens pour sélectionner et stocker une première suite de symboles complexes sélectionnée dans le signal reçu à l'aide d'une fenêtre temporelle d'acquisition laquelle présente une durée supérieure à la durée des occurrences de symboles complexes,
- des moyens pour sélectionner une seconde suite de symboles complexes sélectionnée à un autre moment dans le signal reçu, à l'aide d'une fenêtre temporelle de corrélation de durée égale à celle de la fenêtre temporelle d'acquisition, les moyens de corrélation opérant la corrélation entre la première suite et la seconde suite de symboles complexes,
- des moyens pour déterminer les caractéristiques du format d'émission en recherchant un maximum de corrélation entre la première suite et la seconde suite de symboles complexes en synchronisant la fenêtre d'acquisition sur le signal reçu et en positionnant temporellement les fenêtres l'une par rapport à l'autre, le maximum de corrélation apparaissant lorsque la première et la seconde suite de symboles complexes renferment respectivement lesdites première et seconde occurrences.

Plus particulièrement, les moyens de réception comportent plusieurs voies disposées en parallèle permettant de déterminer plusieurs formats d'émission. Préférentiellement les voies opèrent simultanément. L'invention concerne également le récepteur mis en oeuvre dans un tel système.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent:

Figure 1 : un schéma bloc d'un système émetteur-récepteur de signaux numériques.
Figure 2: un schéma d'un modulateur.
Figure 3 : une représentation de l'emplacement des symboles complexes dans la mémoire de corrélation.
Figure 4: un schéma d'un démodulateur.
Figure 5 : un schéma général du dispositif de synchronisation temporelle selon l'invention.
Figure 6 : un diagramme temporel montrant des positionnements des fenêtres d'acquisition et de corrélation et le signal de corrélation qui en résulte.
Figure 7 : un schéma d'une cellule de corrélation selon l'invention.
Figure 8 : un schéma général d'un système selon l'invention comportant deux voies pour effectuer deux corrélations.
Figure 9: un organigramme montrant différentes étapes du procédé selon l'invention.

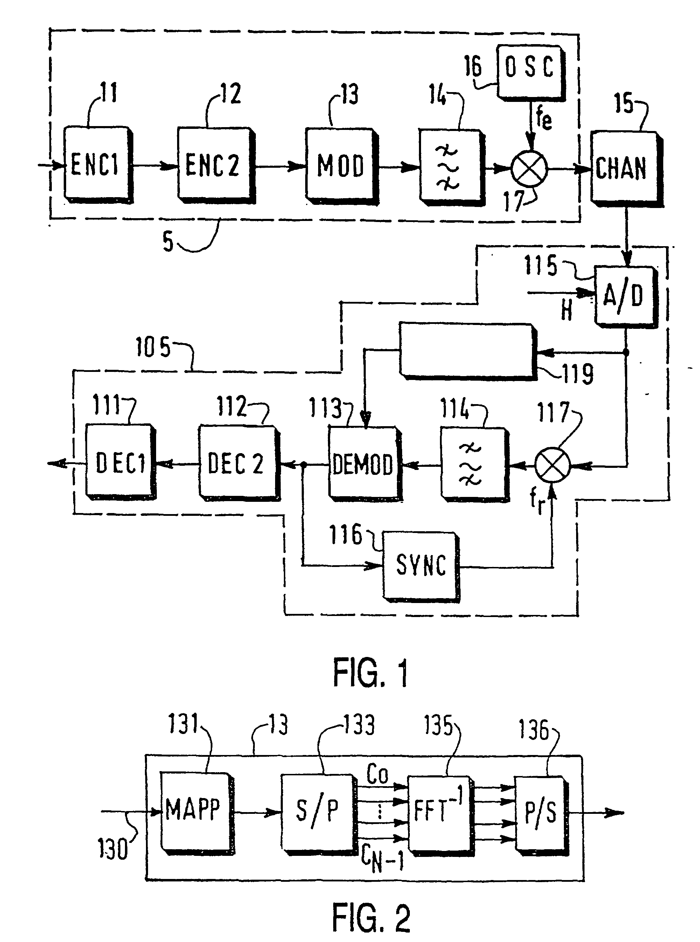

La figure 1 représente un schéma bloc d'un système de transmission numérique formé d'un émetteur 5 et d'un récepteur 105 qui communiquent à travers un canal CHAN 15. Il peut s'agir de liaisons hertziennes, de liaisons par satellite ou de liaisons par câbles. L'émetteur 5 comprend en série:

- un codeur de source ENC1 11 (qui peut ne pas exister),
- un codeur de canal ENC2 12,
- un modulateur OFDM MOD 13,
- un filtre d'émission 14,
- un oscillateur OSC 16 qui génère une porteuse $f_e$,
- un mélangeur 17 mélangeant le signal de sortie du filtre d'émission avec la porteuse $f_e$.

Les échantillons délivrés par le codeur de source 11 sont codés par le codeur de canal 12 pour les rendre non vulnérables aux imperfections du canal. Le modulateur 13 adapte ensuite les échantillons numériques au canal de transmission.

Le récepteur 105 effectue à la réception des opérations inverses de celles effectuées à l'émission. Pour cela il comprend (à la sortie du canal 15):

- un échantillonneur 115 opérant à la cadence de l'horloge H d'échantillonnage du signal.
- un mélangeur 117 qui multiplie les échantillons du signal reçu par une porteuse locale régénérée $f_r$,
- un filtre de réception 114,
- un démodulateur OFDM 113,
- un décodeur de canal DEC2 112,
- un décodeur de source DEC1 111 (si le codeur de source existe à l'émission),
- un dispositif SYNC de synchronisation de porteuse 116 qui génère la porteuse régénérée $f_r$,
- un dispositif 119 de synchronisation temporelle destiné à retrouver le rythme des blocs des symboles OFDM.

L'invention est concernée par la synchronisation temporelle (dispositif 119) et non pas par la synchronisation de porteuse (dispositif 116).

Pour que la description soit claire, les mécanismes connus mis en oeuvre à l'émission et à la réception sont tout d'abord exposés.

La figure 2 représente le schéma du modulateur 13. Les données d'entrée numérisées, présentes sur l'entrée 130, sont introduites dans un organe 131 d'affectation binaire MAPP qui répartit les données d'entrée en symboles codés d'une constellation. Les symboles codés qui apparaissent en série en sortie de l'organe 131 subissent une conversion série-parallèle S/P 133 pour donner lieu à des paquets-blocs de N symboles complexes $C_k$ ($0 \leq k \leq N-1$). Un symbole complexe $C_k$ est utilisé pour moduler une porteuse de fréquence $f_k$ avec $f_k = k/T$ (en raison de l'orthogonalité) où T est la durée d'un symbole OFDM et k l'indice de la porteuse. La combinaison de toutes les porteuses $f_k$, modulées en vue de générer le signal OFDM global, revient à effectuer une transformée de Fourier inverse dans un dispositif 135. Dans le cas particulier où N est une puissance de 2, la transformée de Fourier inverse peut être effectuée en utilisant l'algorithme de transformée rapide inverse ($FFT^{-1}$) comme indiqué sur la figure 2. Ceci permet de réduire la complexité du circuit. Les N signaux issus du dispositif 135 subissent une conversion parallèle-série 136. Ces techniques de modulation sont connues de l'homme du métier.

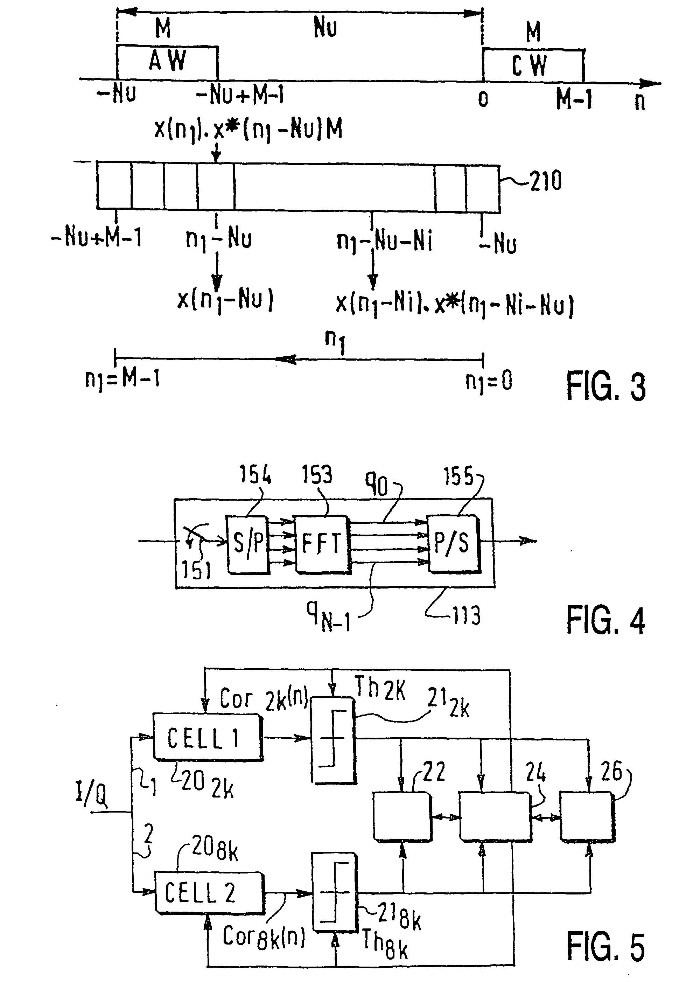

La figure 4 représente le démodulateur 113 qui opère, à la réception, les opérations inverses de celles mises en oeuvre à l'émission. Pour cela, il comprend un échantillonneur 151 qui opère à une cadence N/T où N est le nombre total de porteuses du canal OFDM et 1/T la fréquence symbole. Les échantillons ainsi prélevés subissent une conversion série-parallèle 154 puis sont introduits dans un dispositif 153 qui effectue une transformée de Fourier discrète (de préférence rapide FFT) pour délivrer en parallèle les échantillons $q_k$ ($0 \leq k \leq N-1$) qui subissent une transformation parallèle-série dans un dispositif 155.

Pour certaines applications, le nombre de porteuses OFDM est connu au niveau du récepteur ce qui entraîne que la taille de la FFT est également connue. Mais le récepteur doit néanmoins déterminer le rythme des symboles OFDM ainsi que la structure des symboles OFDM.

Pour d'autres applications, l'émetteur peut mettre en oeuvre différents formats d'émission, donc utiliser des nombres de porteuses différents. Dans ce cas le récepteur doit mettre en oeuvre en outre une procédure pour déterminer sur combien de porteuses est effectuée l'émission.

Dans les deux cas, le dispositif de synchronisation temporelle opère en aveugle, c'est-à-dire qu'il ne dispose que des symboles OFDM reçus et ne reçoit pas l'aide de signaux spécifiques de contrôle.

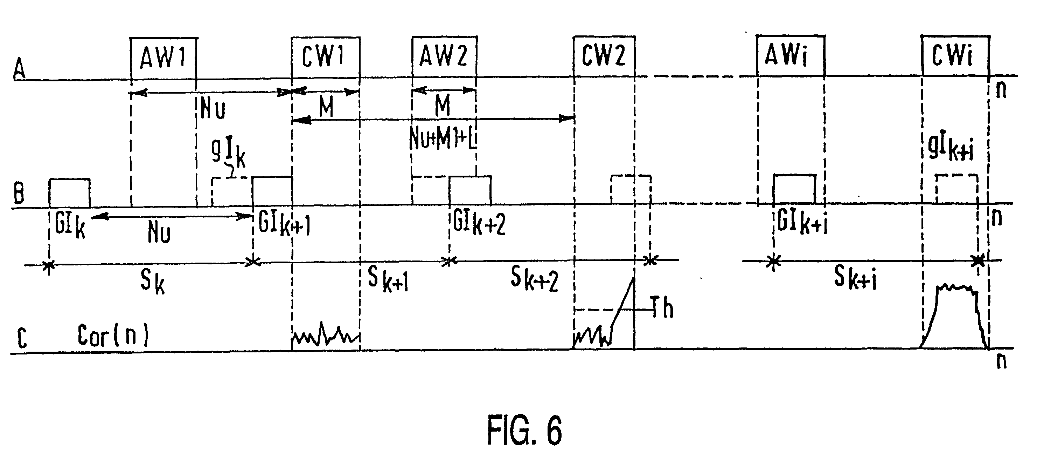

La figure 6 montre sous le repère B un aspect général de la structure des symboles OFDM $S_k$, $S_{k+1}$, $S_{k+2}$ en fonction du temps identifié sur la figure par le nombre n d'échantillons reçus. Le symbole $S_k$ comporte d'une part un intervalle de garde $GI_k$ et d'autre part Nu échantillons qui renferment l'information à décoder. Selon la technique OFDM communément utilisée, l'intervalle de garde $GI_k$ constitue une copie (faite à l'émission) de la fin $gi_k$ des Nu échantillons d'information. Ceci est indiqué en pointillés sur la figure 6. Ainsi chaque bloc OFDM renferme en début et en fin de symbole, deux occurrences $GI_k$ et $gi_k$ d'un groupe d'échantillons identiques. C'est cette répétition d'informations identiques au sein d'un même symbole qui est mise à profit pour retrouver le cadencement et la structure des symboles OFDM émis. Selon les formats utilisés à l'émission la durée de l'intervalle de garde $GI_k$ ainsi que le nombre Nu d'échantillons d'informations peuvent varier soit au cours d'une transmission soit plus généralement pour des applications différentes. Pour permettre au récepteur de fonctionner avec n'importe quel type de format d'émission, l'invention réalise une procédure de reconnaissance dudit format de manière à permettre un décodage correct des données transmises.

La figure 6, sous le repère A, montre des dispositions temporelles pour les fenêtres d'acquisition AW1, AW2 et pour les fenêtres de corrélation CW1, CW2 par rapport aux symboles $S_k$, $S_{k+1}$, $S_{k+2}$. Les fenêtres d'acquisition et de corrélation ont une largeur de M symboles. Considérons le couple de fenêtres AW1 et CW1 que l'on choisit distantes l'une de l'autre de Nu échantillons. A l'apparition de la fenêtre d'acquisition AW1 des échantillons du symbole $S_k$ sont conservés dans une mémoire pour être corrélés avec ceux se présentant lors de l'apparition de la fenêtre de corrélation CW1. Sur la figure 6, on observe que la fenêtre d'acquisition AW1 n'a pas mémorisé l'intervalle de garde $GI_k$. De même, la fenêtre de corrélation CW1 n'est pas en concordance avec une des occurrences $gi_k$, $GI_{k+1}$ ou $gi_{k+1}$. Les corrélations qui sont effectuées selon l'invention entre les échantillons sélectionnés par la fenêtre d'acquisition et par la fenêtre de corrélation sont représentées sous le repère C de la figure 6. En ce qui concerne la corrélation effectuée entre les échantillons contenus dans les fenêtres AW1 et CW1, le résultat ne laisse apparaître qu'un signal de bruit. Au cours de l'étape suivante, la fenêtre d'acquisition et la fenêtre de corrélation sont déplacées conjointement, toujours distantes l'une de l'autre par Nu échantillons. Mais la distance qui sépare deux fenêtres successives de même nature est alors décalée de L échantillons pour être égale à Nu+M+L échantillons. De cette manière, la fenêtre d'acquisition AW2 se présente en partie en même temps que l'intervalle de garde $GI_{k+2}$. De même le fenêtre de corrélation CW2 recouvre partiellement la fin du symbole $S_{k+2}$ qui renferme les mêmes échantillons que l'intervalle de garde $GI_{k+2}$. Le signal de corrélation Cor(n) qui en résulte présente de ce fait un fort accroissement. L'existence de cet accroissement est par exemple détectée lorsque le signal Cor(n) dépasse un seuil Th. En poursuivant cette procédure, on observe que le signal de corrélation va présenter un maximum lorsque la fenêtre d'acquisition va coïncider avec un intervalle de garde $GI_{k+i}$ tandis que la fenêtre de corrélation coïncidera avec la fin du symbole qui renferme la même information gI$_{k+i}$. Ceci est représenté avec le couple de fenêtres AWi/CWi représenté sur la figure 6 où i est le rang des fenêtres. Les signaux de corrélation Cor(n) représentés sur la figure 6 ne sont pas à la même échelle. En calculant la position du maximum de corrélation par rapport à la fenêtre de corrélation, il est possible de calculer la durée de l'intervalle de garde et de synchroniser les fenêtres sur les symboles en calculant le décalage entre le maximum de corrélation et la fenêtre de corrélation.

La figure 5 est un schéma général du dispositif 119 de synchronisation temporelle selon l'invention appliqué au cas de la détermination de deux formats différents d'émission. Une première voie 1 concerne la détermination d'un signal de corrélation Cor$_{2k}$(n) sur Nu=2048 porteuses correspondant à une FFT de 2048 points. Une seconde voie concerne la détermination d'un signal de corrélation Cor$_{8k}$(n) sur Nu=8192 porteuses correspondant à une FFT de 8192 points. Les signaux complexes numérisés I/Q arrivent dans deux cellules de corrélation 20$_{2k}$ et 20$_{8k}$ qui calculent les signaux de corrélation Cor$_{2k}$(n) et Cor$_{8k}$(n). Deux détecteurs à seuil 21$_{2k}$ et 21$_{8k}$ déterminent si les signaux de corrélation sont supérieurs ou inférieurs respectivement aux seuils Th$_{2k}$, Th$_{8k}$. Selon le résultat délivré par ces détecteurs, le sous-ensemble 22 met en oeuvre la procédure de déplacement des fenêtres. Une unité de contrôle 24 opère le contrôle des opérations permettant de sélectionner le format d'émission correspondant aux signaux complexes I/Q reçus. Un sous-ensemble 26 calcule la durée et la position de l'intervalle de garde dans la fenêtre. Ce positionnement est assurée par le sous-ensemble 22.

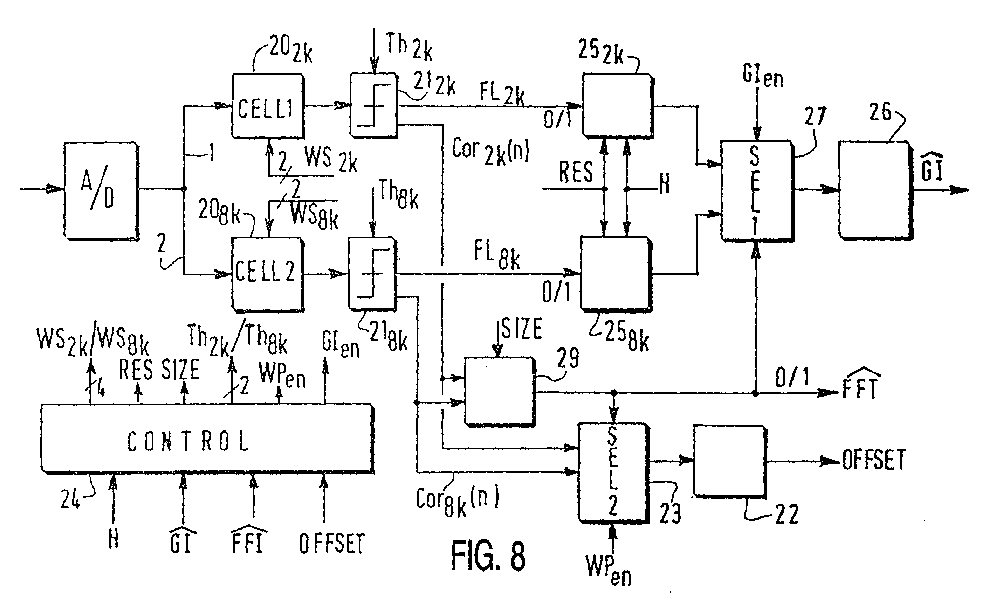

La figure 8 montre le contenu de la figure 5 sous une forme plus détaillée. Les cellules de corrélation 20$_{2k}$ et 20$_{8k}$ sont commandées par respectivement les signaux WS$_{2k}$ et WS$_{8k}$ qui définissent la stratégie appliquée pour effectuer les corrélations. La stratégie correspond à un positionnement précis de chacune des fenêtres pour chacune des voies. Chaque voie dispose d'une stratégie différente qui change lorsque la voie considérée a été estimée gagnante. L'évolution de la stratégie a pour but d'aboutir à la détermination de la FFT et de l'intervalle de garde. La stratégie est gérée par le contrôleur 24 qui délivre des signaux de contrôle nécessaires aux opérations:

- signaux WS$_{2k}$ et WS$_{8k}$: signaux qui définissent la stratégie;
- signal WP$_{en}$ : signal autorisant le transfert de signaux autocorrélés supérieurs au seuil, et ceci pour l'estimation du début du symbole OFDM;
- signal GI$_{en}$ : signal autorisant le transfert de la valeur d'un compteur 25$_{2k}$ ou 25$_{8k}$ de la voie sélectionnée pour opérer le calcul de l'intervalle de garde relatif à cette voie;
- signal SIZE : signal autorisant un changement de taille de FFT jusqu'à l'identification de l'intervalle de garde. Dès que cette identification est réussie, la taille de la FFT peut être gelée;
- signal RES : signal dépendant d'une nouvelle stratégie servant à remettre à zéro l'unité de comptage;
- signal Th : signal définissant le seuil au-dessus duquel un signal de corrélation significatif doit être pris en compte.

Le contrôleur 24 prend en compte les résultats fournis et donc reçoit:

- signal $\hat{FFT}$ : signal de numéro de la voie correspondant à la taille estimée de la FFT;
- signal OFFSET : signal mesurant le décalage de la position du pic de corrélation par rapport à la fenêtre de corrélation utilisé pour déterminer le début du symbole OFDM;
- signal $\hat{GI}$ : signal donnant la durée de l'intervalle de garde en nombre d'échantillons;
- signal H : horloge d'échantillonnage.

Lorsque le signal de corrélation est supérieur au seuil, le détecteur de seuil envoie un signal qui incrémente le compteur 25$_{2k}$, 25$_{8k}$ placé dans la voie. Au départ, l'une ou l'autre des voies peut être sélectionnée. Cette sélection est opérée sur la base de l'amplitude des pics de corrélation mesurés sur chaque voie. Pour cela les amplitudes des pics de corrélation sont comparés dans un comparateur 29 qui détermine la taille de la FFT en délivrant un signal $\hat{FFT}$. Celui-ci active un premier sélecteur SEL1 27 qui connecte la voie sélectionnée sur le dispositif de calcul 26 qui détermine la durée de l'intervalle de garde et qui délivre le signal $\hat{GI}$ . De la même manière, le signal $\hat{FFT}$ active un second sélecteur 23 qui transmet l'amplitude du signal de corrélation de la voie sélectionnée vers une unité de calcul 22 qui mesure le décalage existant entre le maximum de corrélation et le début de la fenêtre de corrélation.

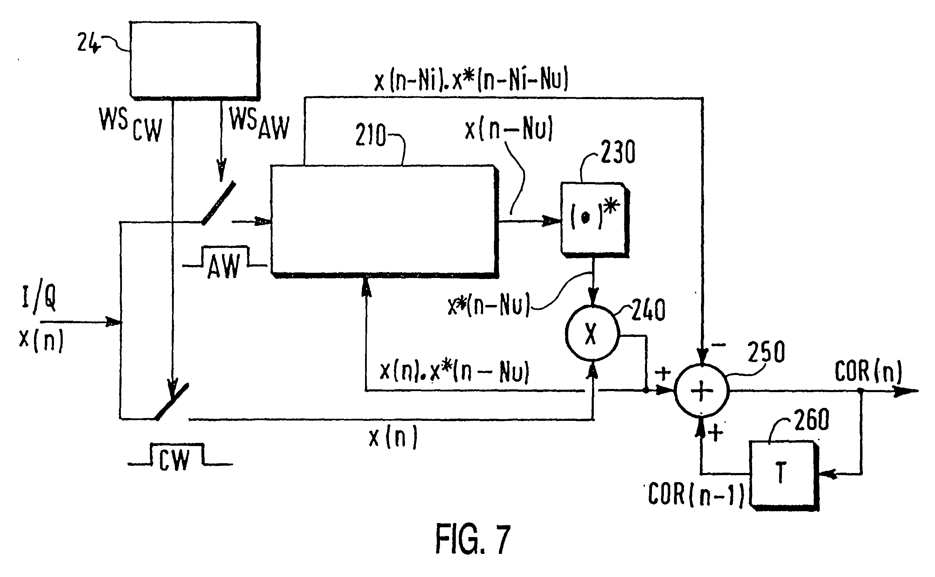

Le schéma d'une cellule de corrélation est représenté sur la figure 7. Elle comporte une unité mémoire 210 fonctionnant en mode FIFO. Celle-ci reçoit une première suite de symboles complexes d'entrée x(n) (symboles complexes I/Q) durant l'ouverture de la fenêtre d'acquisition AW dont la durée et la position temporelle sont déterminées par l'unité de contrôle 24.

Selon la procédure qui a été décrite, la fenêtre de corrélation CW est ouverte par le contrôleur 24 avec un retard de Nu échantillons relativement à la fenêtre AW, pour sélectionner une seconde suite de symboles complexes x(n). Simultanément, la sortie de l'unité mémoire délivre des données x(n-Nu) qui sont transformées en données conjuguées x*(n-Nu) dans un sous-ensemble de transformation 230. Une unité de multiplication 240 multiplie la seconde suite x(n) par les données conjuguées x*(n-Nu) pour fournir x(n).x*(n-Nu). On calcule un signal de corrélation Cor(n) sur une fenêtre glissante qui est déplacée à l'intérieur de la fenêtre de corrélation CW. L'accumulation du signal x(n).x*(n-Nu) sur la fenêtre glissante Ni détermine le signal de corrélation Cor(n) selon:

$$Cor(n) = \sum_{k=n-Ni+1}^{n} x(k)\, x^{*}(k-Nu)\,.$$

Cette relation peut également être écrite sous la forme:

Cor(n)= Cor(n-1) + x(n).x*(n-Nu) - x(n-Ni).x*(n-Ni-Nu).

La longueur de la fenêtre glissante Ni doit rester inférieure ou égale à la plus petite largeur d'intervalle de garde Ng couramment identifiée de la voie considérée, c'est-à-dire:

- Ni= $Ng_{min}$ pendant la phase de détermination de la taille de la FFT et de la largeur de l'intervalle de garde;
- $Ni=\hat{Ng}$ où $\hat{Ng}$ est l'estimée de Ng après identification de la largeur de l'intervalle de garde.

La cellule de corrélation effectue les opérations suivantes:

- stockage des échantillons reçus x(n) dans la mémoire pendant l'ouverture de la fenêtre d'acquisition. Du fait du décalage de Nu échantillons entre l'ouverture de la fenêtre d'acquisition AW et celle de la fenêtre de corrélation CW, les échantillons qui sortent de la mémoire sont référencés sous la forme x(n-Nu) en appelant x(n) les échantillons courants sélectionnés par la fenêtre de corrélation CW;
- transformation des données stockées x(n-Nu) en données conjuguées x*(n-Nu);
- dans le multiplieur 240, calcul de x(n).x*(n-Nu);
- sélection des données x(n-Ni).x*(n-Ni-Nu);
- dans un additionneur/soustracteur 250, soustraction entre x(n).x*(n-Nu) et x(n-Ni).x*(n-Ni-Nu) et addition du résultat à Cor(n-1) pour fournir le signal de corrélation Cor(n) à l'instant n;
- dans un dispositif de retard 260, décalage du signal Cor(n) d'une période d'horloge pour être utilisé à la période suivante.

Le fonctionnement de l'unité mémoire 210 s'effectue de la manière suivante (voir figure 3):

- à l'instant n=nl (référencé par rapport au début de la fenêtre CW), avec n1 compris entre 0 et M-1, on calcule x(n1).x*(n1-Nu) que l'on mémorise à l'emplacement mémoire où x(n1-Nu) était stocké. Le signal x(n1-Ni).x*(n1-Ni-Nu) commence à opérer à partir de l'instant où il existe, c'est-à-dire à l'instant n supérieur ou égal à Ni.

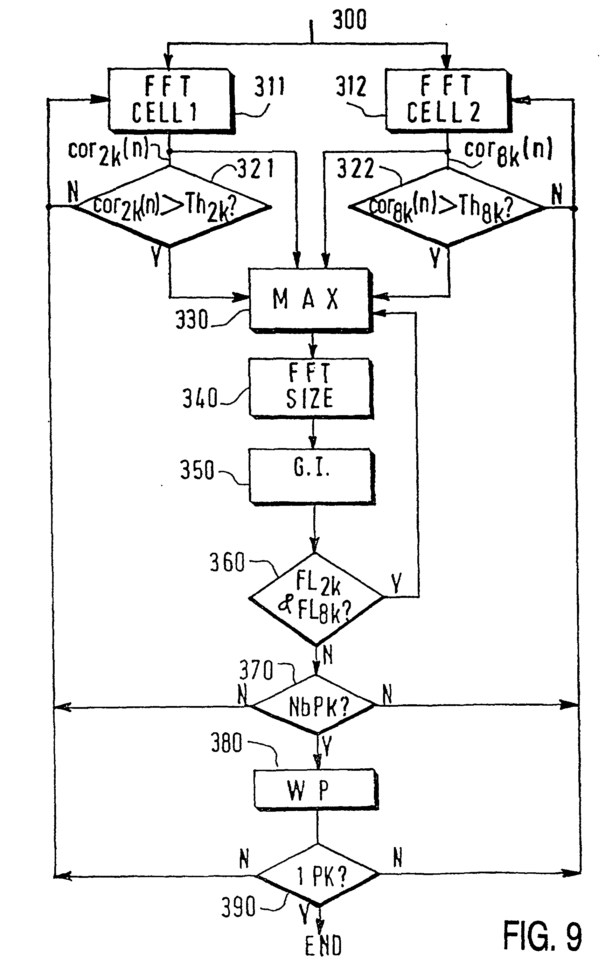

La figure 9 montre un organigramme des différentes étapes du procédé selon l'invention dans le cas de la détermination de deux formats différents d'émission opérée d'après le schéma de la figure 8. Le procédé débute par le calcul des signaux de corrélation dans les cellules CELL1 et CELL2 pour fournir respectivement les signaux $Cor_{2k}(n)$ et $Cor_{8k}(n)$ au cours des étapes 311 et 312. Au cours des étapes 321 et 322, ces signaux sont comparés respectivement à des seuils $Th_{2k}$ et $Th_{8k}$, les résultats respectifs de ces comparaisons constituant des drapeaux $FL_{2k}$ et $FL_{8k}$. Si le seuil n'est pas dépassé (résultat négatif N), les étapes 311 et 312 sont recommencées. Si le seuil est dépassé (résultat positif Y), au cours de l'étape 330 on détermine celui des signaux $Cor_{2k}(n)$ ou $Cor_{8k}(n)$ qui a l'amplitude maximale. A partir du signal qui a l'amplitude maximale, on détermine la taille de la FFT (2k ou 8k) (étape 340) ainsi que la durée de l'intervalle de garde (étape 350) calculée par la cellule de corrélation de la FFT identifiée.

Lorsque les étapes 321 et 322 se déroulent, une des étapes, l'étape 321 par exemple, peut délivrer un résultat positif, alors que l'autre étape 322 délivre un résultat négatif ce qui oblige la cellule CELL2 à recommencer l'étape 312. Pour cette raison, il est nécessaire à la fin de l'étape 350 de vérifier que l'étape 322 n'a pas délivré un résultat positif alors que les étapes 330, 340 et 350 se déroulaient. Cette vérification est effectuée durant l'étape 360. Si $FL_{2k}$ et $FL_{8k}$ sont simultanément positifs (état Y), l'étape 360 fait reprendre le procédé à l'étape 330 pour déterminer à nouveau lequel des signaux $Cor_{2k}(n)$ ou $Cor_{8k}(n)$ a l'amplitude maximale. Il est nécessaire de remettre à zéro le drapeau de la voie non sélectionnée. Si les signaux $Cor_{2k}(n)$ et $Cor_{8k}(n)$ ne sont pas simultanément à l'état positif (Y), le procédé passe à l'étape 370 qui détermine si le nombre de pics de corrélation détectés correspond au nombre de symboles OFDM utilisés pour cette détermination. Si le nombre de pics n'est pas correct, le procédé reprend aux étapes 311 ou 312. Si ce nombre est correct, le procédé passe à l'étape 380 pour calculer la position de la fenêtre de corrélation. On s'assure que la fenêtre est correctement positionnée en effectuant une autre vérification au cours de l'étape 390 qui détermine s'il existe bien un seul pic de corrélation dans la fenêtre ainsi positionnée. Si cette vérification est négative (résultat N), la fenêtre n'est pas correctement positionnée et le procédé reprend aux étapes 311 et 312. Si le résultat est positif (Y), le système de synchronisation temporelle est correctement défini et le récepteur est prêt à fonctionner.

## Revendications

**1.** Procédé de détermination d'un format d'émission de symboles complexes dans un signal formaté en blocs de symboles complexes, chaque bloc comportant une première occurrence ($GI_k$) d'un groupe

de symboles complexes et une deuxième occurrence (gl$_u$) du même groupe de symboles complexes, les deux occurrences ayant une même durée, le procédé opérant une corrélation entre la première occurrence et la seconde occurrence pour déterminer des caractéristiques du format d'émission **caractérisé en ce que** le procédé comporte les étapes suivantes:

- stockage d'une première suite de symboles complexes sélectionnée dans le signal reçu à l'aide d'une fenêtre temporelle d'acquisition (AW) laquelle présente une durée supérieure à la durée des occurrences de symboles complexes,

- corrélation (311,312) de la première suite de symboles complexes avec une seconde suite de symboles complexes sélectionnée à un autre moment dans le signal reçu, à l'aide d'une fenêtre temporelle de corrélation (CW) de durée égale à celle de la fenêtre temporelle d'acquisition,

- détermination des caractéristiques du format d'émission (330,340,350,380) en recherchant un maximum de corrélation entre la première suite et la seconde suite de symboles complexes en synchronisant la fenêtre d'acquisition sur le signal reçu et en positionnant temporellement les fenêtres l'une par rapport à l'autre, le maximum de corrélation apparaissant lorsque la première et la seconde suite de symboles complexes renferment respectivement lesdites première et seconde occurrences.

2. Procédé selon la revendication 1, le signal étant un signal à répartition multiplexée de fréquences orthogonales, dit signal OFDM, **caractérisé en ce que** le procédé détermine un nombre de fréquences orthogonales contenues dans au moins un format d'émission du signal OFDM.

3. Système de transmission d'un signal à répartition multiplexée de fréquences orthogonales, dit signal OFDM, le système comprenant des moyens d'émission (5) dudit signal formaté en blocs de symboles complexes conformément à un format d'émission, chaque bloc comportant une première occurrence d'un groupe de symboles complexes et une deuxième occurrence du même groupe de symboles complexes, les deux occurrences ayant une même durée, et des moyens de réception (105) comportant des moyens de corrélation pour déterminer une corrélation entre la première occurrence et la seconde occurrence et déterminer des caractéristiques du format d'émission **caractérisé en ce que** les moyens de réception (105) comportent:

- des moyens pour sélectionner et stocker (24,210) une première suite de symboles complexes sélectionnée dans le signal reçu à l'aide d'une fenêtre temporelle d'acquisition (AW) laquelle présente une durée supérieure à la durée des occurrences de symboles complexes,

- des moyens pour sélectionner (24) une seconde suite de symboles complexes sélectionnée à un autre moment dans le signal reçu, à l'aide d'une fenêtre temporelle de corrélation (CW) de durée égale à celle de la fenêtre temporelle d'acquisition, les moyens de corrélation (240,250,260) opérant la corrélation entre la première suite et la seconde suite de symboles complexes,

- des moyens pour déterminer les caractéristiques du format d'émission (330,340,350,380) en recherchant un maximum de corrélation entre la première suite et la seconde suite de symboles complexes en synchronisant la fenêtre d'acquisition sur le signal reçu et en positionnant temporellement les fenêtres l'une par rapport à l'autre, le maximum de corrélation apparaissant lorsque la première et la seconde suite de symboles complexes renferment respectivement lesdites première et seconde occurrences.

4. Système selon la revendication 3 **caractérisé en ce que** les moyens de réception comportent plusieurs voies disposées en parallèle permettant de déterminer plusieurs formats d'émission.

5. Système selon la revendication 4 **caractérisé en ce que** les voies opèrent simultanément.

6. Récepteur (105) pour recevoir un signal à répartition multiplexée de fréquences orthogonales, dit signal OFDM, le signal étant formaté en blocs de symboles complexes conformément à un format d'émission, chaque bloc comportant une première occurrence d'un groupe de symboles complexes et une deuxième occurrence du même groupe de symboles complexes, les deux occurrences ayant une même durée, le récepteur comportant des moyens de corrélation pour déterminer une corrélation entre la première occurrence et la seconde occurrence pour déterminer des caractéristiques du format d'émission pour détecter le signal reçu **caractérisé en ce que** les moyens de réception comportent:

- des moyens pour sélectionner et stocker (24,210) une première suite de symboles complexes sélectionnée dans le signal reçu à l'aide d'une fenêtre temporelle d'acquisition (Aw) laquelle présente une durée supérieure à la durée des occurrences de symboles complexes,

- des moyens pour sélectionner (24) une seconde suite de symboles complexes sélectionnée à un autre moment dans le signal reçu, à l'aide d'une fenêtre temporelle de corrélation (CW) de durée égale à celle de la fenêtre temporelle d'acquisition, les moyens de corrélation (240,250,260) opérant la corrélation entre la première suite et la seconde suite de symboles complexes,

- des moyens pour déterminer les caractéristiques du format d'émission (330,340,350,380) en recherchant un maximum de corrélation entre la première suite et la seconde suite de symboles complexes en synchronisant la fenêtre d'acquisition sur le signal reçu et en positionnant temporellement les fenêtres l'une par rapport à l'autre, le maximum de corrélation apparaissant lorsque la première et la seconde suite de symboles complexes renferment respectivement lesdites première et seconde occurrences.

7. Récepteur selon la revendication 6 **caractérisé en ce que** les moyens de réception comportent plusieurs voies disposées en parallèle permettant de déterminer plusieurs formats d'émission.

8. Récepteur selon la revendication 7 **caractérisé en ce que** les voies opèrent simultanément.

**Patentansprüche**

1. Verfahren zur Bestimmung eines Übertragungsformats von komplexen Symbolen in einem aus komplexen Symbolen blockformatierten Signal, wobei jeder Block einen ersten Auftritt (glk) einer Gruppe komplexer Symbole und einen zweite Auftritt (glk) derselben Gruppe komplexer Symbole enthält, die zwei Auftritte mit derselben Dauer, und Verfahren zur Bestimmung der Merkmale des Übertragungsformats eine Korrelation zwischen dem ersten Auftritt und dem zweiten Auftritt ausführt, **dadurch gekennzeichnet, dass** das Verfahren folgende Schritte umfasst:

- Speicherung einer ersten komplexen Symbolfolge, dem erhaltenen Signal mit Hilfe eines temporalen Erfassungsfensters (AW) entnommen, welche eine über der Dauer der Auftritte komplexer Symbolen liegende Dauer aufweist,
- Korrelation (311, 312) der ersten komplexen Symbolfolge mit einer zweite komplexen Symbolfolge, in einem anderen Zeitpunkt im erhaltenen Signal ausgewählt, mit Hilfe eines temporalen Korrelationsfensters von gleicher Dauer wie der des temporalen Erfassungsfensters,
- Bestimmung der Merkmale des Übertragungsformats (330, 340, 350, 380) mit der Suche maximaler Korrelation zwischen der ersten und der zweiten komplexen Symbolfolge, der Synchronisierung des Erfassungsfensters auf das erhaltene Signal und der temporalen Positionierung der Fenster zueinander, wobei maximale Korrelation entsteht, wenn die erste und die zweite komplexe Symbolfolge respektive den besagten ersten und zweiten Auftritt enthält.

2. Verfahren nach Anspruch 1, wobei das Signal ein Signal mit Multiplexaufteilung orthogonaler Frequenzen ist, ein so genanntes OFDM-Signal, **dadurch gekennzeichnet, dass** das Verfahren eine Anzahl orthogonaler Frequenzen festlegt, die in mindestens einem Übertragungsformat des OFDM-Signals enthalten sind.

3. Übertragungssystem eines Signals mit Multiplexaufteilung orthogonaler Frequenzen, ein so genanntes OFDM-Signal, wobei das System Übertragungsmittel (5) des besagten aus komplexen Symbolen blockformatierten Signals entsprechend einem Übertragungsformat enthält, jeder Block einen ersten Auftritt einer Gruppe komplexer Symbole und einen zweiten Auftritt derselben Gruppe komplexer Symbole enthält und die zwei Auftritte eine selbe Dauer haben, und es Empfangsmittel mit Korrelationsmitteln zur Bestimmung einer Korrelation zwischen dem ersten Auftritt und dem zweiten Auftritt und zur Bestimmung der Merkmale des Übertragungsformats enthält, **dadurch gekennzeichnet, dass** die Empfangsmittel (105)enthalten:

- Mittel für die Auswahl und Speicherung (24, 210) einer ersten komplexen Symbolfolge, ausgewählt im erhaltenen Signal mithilfe eines temporalen Erfassungsfensters (AW), welches eine über der Dauer der Auftritte komplexer Symbole liegende Dauer hat,
- Mittel für die Auswahl (24) einer zweiten komplexen Symbolfolge, in einem anderen Zeitpunkt im erhaltenen Signal ausgewählt, mithilfe eines temporalen Korrelationsfensters (CW) von gleicher Dauer wie der des temporalen Erfassungsfensters, wobei die Korrelationsmittel die Korrelation (240, 250, 260) zwischen der ersten Folge und der zweiten Folge komplexer Symbole ausführen,
- Mittel zur Bestimmung der Merkmale des Übertragungsformats (330, 340, 350, 380) mit der Suche maximaler Korrelation zwischen der ersten und der zweiten komplexen Symbolfolge mit der Synchronisierung des Erfassungsfensters auf das erhaltene Signal und der temporalen Positionierung der Fenster zueinander, wobei maximale Korrelation entsteht, wenn die erste und die zweite komplexe Symbolfolge respektive den besagten ersten und zweiten Auftritt enthält.

4. System nach Anspruch 3, **dadurch gekennzeichnet, dass** die Empfangsmittel mehrere parallel angeordnete Wege enthalten, um mehrere Übertragungsformate bestimmen zu können.

5. System nach Anspruch 4, **dadurch gekennzeichnet, dass** die Wege simultan operieren.

6. Empfänger (105) für den Empfang eines Signals mit Multiplexaufteilung orthogonaler Frequenzen, ein so genanntes OFDM-Signal, wobei das Signal aus komplexen Symbolen blockformatiert ist, entsprechend einem Übertragungsformat, jeder Block einen ersten Auftritt einer Gruppe von komplexen Symbolen und einen zweiten Auftritt derselben Gruppe mit komplexen Symbolen aufweist, beide Auftritte mit einer selben Dauer, der Empfänger Korrelationsmittel zur Bestimmung einer Korrelation zwischen dem ersten Auftritt und dem zweiten Auftritt enthält, um die Merkmale des Übertragungsformats zu bestimmen und das erhaltene Signal zu erkennen, **dadurch gekennzeichnet, dass** die Empfangsmittel enthalten:

   - Mittel für die Auswahl und Speicherung (24, 210) einer ersten komplexen Symbolfolge, ausgewählt im erhaltenen Signal mithilfe eines temporalen Erfassungsfensters (AW), welches eine über der Dauer der Auftritte komplexer Symbole liegende Dauer hat,
   - Mittel für die Auswahl (24) einer zweiten komplexen Symbolfolge, in einem anderen Zeitpunkt im erhaltenen Signal ausgewählt, mithilfe eines temporalen Korrelationsfensters von gleicher Dauer wie der des temporalen Erfassungsfensters, wobei die Korrelationsmittel (240, 250, 260) die Korrelation zwischen der ersten Folge und der zweiten Folge komplexer Symbole ausführen,
   - Mittel zur Bestimmung des Übertragungsformats (330, 340, 350, 380) mit der Suche maximaler Korrelation zwischen der ersten und der zweiten komplexen Symbolfolge mit der Synchronisierung des Erfassungsfensters auf das erhaltene Signal und der temporalen Positionierung der Fenster zueinander, wobei maximale Korrelation entsteht, wenn die erste und die zweite komplexe Symbolfolge respektive den besagten ersten und zweiten Auftritt enthält.

7. Empfänger nach Anspruch 6, **dadurch gekennzeichnet, dass** die Empfangsmittel mehrere parallel angeordnete Wege enthalten, um mehrere Übertragungsformate bestimmen zu können.

8. Empfänger nach Anspruch 7, **dadurch gekennzeichnet, dass** die Wege simultan operieren.

**Claims**

1. A method of determining a transmission format for complex symbols in a signal formatted in complex symbol blocks which method can be applied to a transmission system, each block having a first occurrence ($GI_k$) of a group of complex symbols and a second occurrence ($gI_k$) of the same group of complex symbols, the two occurrences having a like duration, the method effecting a correlation between the first occurrence and the second occurrence for determining characteristic features of the transmission format, **characterized in that** a recovery method of recovering complex symbols which method comprises the following steps:

   - storage of a first sequence of complex symbols taken from the received signal via an acquisition time window (AW) which has a longer duration than the duration of the occurrences of complex symbols,
   - correlation (311, 312) of the first sequence of complex symbols with a second sequence of complex symbols selected at another moment in the received signal, via a correlation time window (CW) which has a duration equal to that of the acquisition time window,
   - determination of characteristics of the transmission format (330, 340, 350, 380) by searching for maximum correlation between the first and the second sequences of complex symbols by synchronizing the acquisition window with the received signal and by positioning the windows relative to each other in time, the maximum correlation appearing when the first and second sequences of complex symbols include said first and second occurrences, respectively.

2. The method as claimed in claim 1, the signal being an orthogonal frequency-division multiplexing signal called OFDM signal, **characterized in that** the method determines a number of orthogonal frequencies included in at least one transmission format of the OFDM signal.

3. A transmission system for transmitting an orthogonal frequency-division multiplexing signal called OFDM signal, the system comprising transmission means (5) for transmitting said signal formatted in blocks of complex symbols in accordance with a transmission format, each block comprising a first occurrence of a group of complex symbols and a second occurrence of the same group of complex symbols, the two occurrences having a like duration, and receiving means (105) comprising correlation means for determining a correlation between the first occurrence and the second occurrence and determining characteristic features of the transmission format, **characterized in that** the receiving means (105) comprise:

- means for selecting and storing (24, 210) a first sequence of complex symbols selected in the received signal via an acquisition time window (AW) which has a duration that is longer than the duration of the occurrence of complex symbols,

- means for selecting (24) a second sequence of complex symbols which is selected at another moment in the received signal via a correlation time window (CW) which has a duration equal to that of the acquisition time window, the correlation means (240, 250, 260) effecting the correlation between the first sequence and the second sequence of complex symbols,

- means for determining the characteristic features of the transmission format (330, 340, 350, 380) by searching for maximum correlation between the first sequence and the second sequence of complex symbols by synchronizing the acquisition window with the received signal and by positioning the windows with respect to each other in time, the maximum correlation occurring when the first and the second sequence of complex symbols include said first and second occurrences, respectively.

4. The system as claimed in claim 3, **characterized in that** the receiving means comprise various channels running in parallel and permitting of determining various transmission formats.

5. The system as claimed in claim 4, **characterized in that** the channels operate simultaneously.

6. A receiver (105) for receiving an orthogonal frequency-division multiplexing signal called OFDM signal, the signal being formatted in blocks of complex symbols which are in conformity with the transmission format, each block having a first occurrence of a group of complex symbols and a second occurrence of the same group of complex symbols, the two occurrences having a like duration, the receiver comprising correlation means for determining a correlation between the first occurrence and the second occurrence to determine characteristic features of the transmission format for detecting the received signal, **characterized in that** the receiving means comprise:

- means for selecting and storing (24, 210) a first sequence of complex symbols selected in the received signal via an acquisition time window (AW) which has a duration that is longer than the duration of the occurrences of complex symbols,

- means for selecting (24) a second sequence of complex symbols which is selected at another moment in the received signal via a correlation time window (CW) which has a duration equal to that of the acquisition time window, the correlation means (240, 250, 260) effecting the correlation between the first sequence and the second sequence of complex symbols,

- means for determining the characteristic features of the transmission format (330, 340, 350, 380) by searching for maximum correlation between the first sequence and the second sequence of complex symbols by synchronizing the acquisition window with the received signal and by positioning the windows with respect to each other in time, the maximum correlation occurring when the first and the second sequence of complex symbols include said first and second occurrences, respectively.

7. The receiver as claimed in claim 6, **characterized in that** the receiving means comprise various channels running in parallel and permitting of the determination of various transmission formats.

8. The receiver as claimed in claim 7, **characterized in that** the channels operate simultaneously.

FIG. 1

FIG. 2

FIG. 3

FIG. 4

FIG. 5

FIG. 6

EP 0 881 804 B1

FIG. 7

FIG. 8

EP 0 881 804 B1

FIG. 9